# EUROPEAN PATENT APPLICATION

(11) **EP 1 990 717 A1**
(43) Date of publication of application: **12.11.2008**
(21) Application number: 06714823.9
(22) Date of filing: 28.02.2006
(51) Int. Cl.: G06F 9/46, G06F 9/50

(54) **COMPUTER SYSTEM AND COMPUTER SYSTEM CONFIGURATION METHOD**

(71) Applicant: Fujitsu Ltd., Kawasaki-shi, Kanagawa 211-8588 (JP)
(72) Inventor: UCHIDA, Yasuhiko, Kawasaki-shi, Kanagawa 211-8588 (JP)
(74) Representative: Stebbing, Timothy Charles
(86) International application number: PCT/JP2006/303686
(87) International publication number: WO 2007/099587

(57) **Abstract**

A computer system includes a plurality of domains and a service processor. The service processor sets and changes a configuration of the domain by setting and changing configuration information for determining to combine and separate a hardware resource. The service processor includes a configuration information storing unit registering the configuration information, a first domain communicating unit transmitting the configuration information to the domain, and a domain controlling unit registering the configuration information in the configuration information storing unit to transfer the configuration information to the first domain communicating unit. Each of the domains includes a second domain communicating unit receiving the configuration information, and a configuration changing engine for actually setting and changing the configuration of the domain based on the received configuration information.

## Description

### CROSS REFERENCE TO RELATED APPLICATIONS

This is a continuation application of PCT application serial number PCT/JP2006/303686, filed on February 28, 2008.

### BACKGROUND OF THE INVENTION

### 1. Field of the Invention

An embodiment of the present invention relates to a computer system and a method for configuring thereof, which may include a computer system and a computer system configuring method in which a plurality of OSs can operate in a plurality of domains, and hardware resources can be separated and be combined in each of the domains.

### 2. Description of the Related Art

It is known that the computer system is configured with the plurality of domains. One domain is a hardware configuration (or unit) on which one OS (Operating System) operates, and includes one or more system boards. One system board includes a set of the hardware resources configured with a CPU (Central Processing Unit), a memory, an I/O apparatus (or a slot thereof), and the like. By freely separating and combining (changing a domain configuration) the hardware resources for each domain, it is possible to improve the performance of the computer system, and to satisfy a variety of requests of a user.

For example, the computer system is divided to a plurality of the domains by using a domain configuration register, thereby, a computer resource (hardware resource) can be efficiently assigned to a variety of tasks, and as a result, the flexibility for using the computer system is improved. The above is well known (refer to Patent Document 1: Japanese Patent Laid-Open No. 2003-30162).

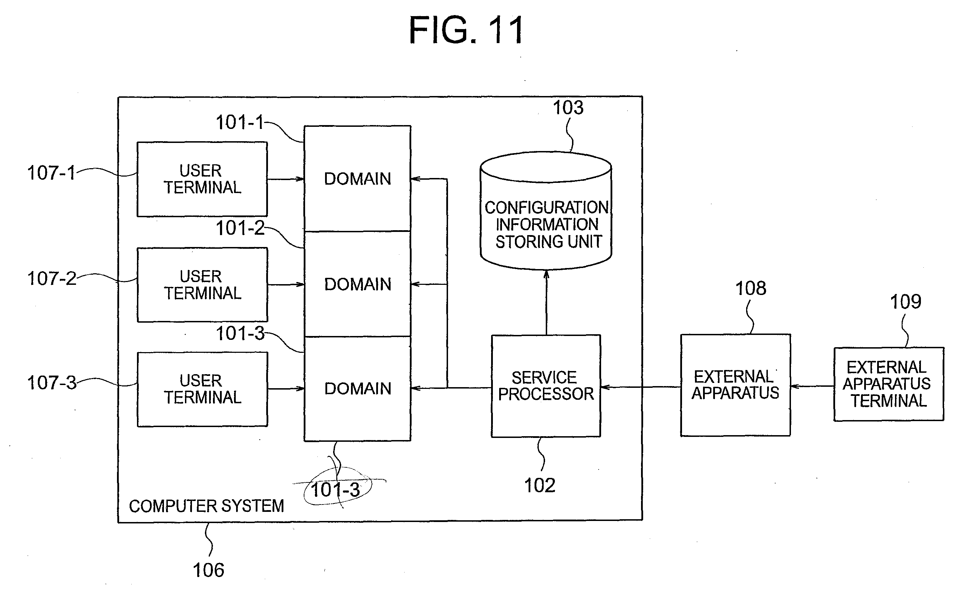

FIG. 11 is the computer system configured with a plurality of the domains which is a background of the present invention, and illustrates a configuration of the computer system studied by the present invention.

A computer system 106 includes a plurality (#1 to #3, three units) of domains 101 (101-1 to 101-3) and one service processor 102. The domain 101 can combine (or incorporate) and separate (or disconnect) hardware resources thereof. The service processor 102 includes a configuration information storing unit 103 for storing configuration information of the domain 101. The configuration information storing unit 103 is referred to by the domain 101. The service processor 102 turns on the power supply, executes initial setting, and turns off the power supply for the hardware which configures in the domain 101.

In the computer system 106, a configuration of the domain 101 is initially set (in this specification, simply referred to an initial setting) before an operation is started (or before the power supply is turned on) by registering the configuration information from an external apparatus 108 to the configuration information storing unit 103. Thus, the service processor 102 includes the external apparatus 108, and a user interface through the external apparatus 108. The external apparatus 108 is an apparatus provided outside the computer system 106, and comprises a personal computer connected to the service processor 102, for example. The user generates the configuration information of the domain 101 by using the external apparatus 108 (through the service processor 102), notifies (registers) the configuration information storing unit 103 of the configuration information, turns on the power supply of the domain 101 according to the generated configuration information, and boots and starts up an OS of the domain 101.

On the other hand, in the computer system 106, the configuration of the domain 101 is changed (in this specification, simply referred to a configuration change) after the operation is started (or after the power supply is turned on) by the OS of each domain 101. Thereby, the configuration information can be changed with causing the computer system 106 to operate, and without turning off the power supply of the computer system 106. Thus, the domain 101 includes a user interface. When changing the configuration information, the user changes the configuration information in the configuration information storing unit 103 from, for example, a user terminal 107-1 of the domain 101-1 whose configuration is to be changed.

Even after the operation of the computer system 106 is started, it is possible to change the configuration information from the external apparatus 108 through the service processor 102 to change the configuration of the domain. However, in this case, only after the power supply of the computer system 106 is turned off (or only after the operation of the computer system 106 is stopped), it is possible to change the configuration of the domain. As a result, this processing is the same as the process before the operation of the computer system 106 is started. That is, while the configuration of the domain can be statistically changed (can be changed when the power supply is turned off), the configuration of the domain cannot be dynamically changed (cannot be changed when the power supply is turned on), so that the configuration information has been fixed in this sense.

We have studied the computer system illustrated in FIG. 11, and has found the following problem.

As described above, the configuration of the domain 101 needs to be initially set by using the external apparatus 108 for connecting to the service processor 102. Thus, the user needs to purchase the dedicated external apparatus 108 in addition to a main box of the computer system 106, so that this is a large charge for the user.

On the other hand, the configuration of the domain 101 needs to be changed by using the user terminal 107 of the domain 101 whose configuration is to be changed. Thus, the configuration information needs to be initially set by using the external apparatus 108 (an external apparatus terminal 109 of the external apparatus 108) through the service processor 102, and the configuration information needs to be changed by using each user terminal 107 of the domain 101, so that the convenience is not enough for the user.

In addition, for example, a user terminal 107-1 of a domain 101-1 needs to be used to change the configuration of the domain 101-1. Thus, the OS is different for each domain 101. Thus, an operation and an accessing method for changing the configuration of the domain 101 are different for each domain 101, so that this is troublesome for the user. It is necessary to provide the redundant hardware resources to set the configuration information.

Since the user terminal 107-1 of the domain 101-1, for example, needs to be used to change the configuration of the domain 101, the configuration can be changed only for each domain 101. The configuration information of another domain 101-2 cannot be referred to from the domain 101-1 to be changed, and the configuration information which can be referred to from the domain 101-1 is limited only to the configuration information of the domain 101-1. Thus, the configuration can be understood only for each domain 101. It is necessary to access all the domains 101-1 to 101-3 by using the user terminals 107-1 to 107-3 of the domains 101-1 to 101-3 to understand the whole configuration of computer system 106, so that this is troublesome for the user.

As apparent from the above description, in one computer system 106, a plurality of paths and processes exist to change the configuration of the domain 101. Thus, it is required to enable the configuration of the domain 101 to be changed only by the single path and process.

### SUMMARY OF THE INVENTION

One aspect of an object of the present invention is to provide a computer system in which the service processor can change the configuration of each of the plurality of domains without the external apparatus.

Another aspect an object of the present invention is to provide a computer system configuring method that the service processor can change the configuration of each of the plurality of domains without the external apparatus.

A computer system of an embodiment of the present invention comprises a plurality of domains each of which comprises a plurality of hardware resources, and in each of which one OS (Operating System) operates and the OS and the plurality of hardware resources can be combined and separated, and a service processor setting and changing a configuration of each of the plurality of domains by setting and changing configuration information determining to combine and separate the plurality of hardware resources. The service processor includes an input unit inputting the configuration information indicating a configuration of the domain, a configuration information storing unit registering the configuration information, a first domain communicating unit transmitting the configuration information to the domain, and a domain controlling unit registering the configuration information inputted from the input unit in the configuration information storing unit, and transferring the configuration information to the first domain communicating unit. Each of the plurality of domains includes a second domain communicating unit receiving the configuration information transmitted from the service processor, and a configuration changing engine actually setting and changing the configuration of the domain based on the configuration information received by the second domain communicating unit.

The computer system of an embodiment of the present invention has the service processor further includes an interface for enabling the configuration information to be inputted from the input unit. The domain controlling unit registers the configuration information inputted from the input unit through the interface in the configuration information storing unit, and transmits the configuration information to the first domain communicating unit.

The computer system of an embodiment of the present invention has the plurality of hardware resources which comprise a plurality of system boards, and has the plurality of system boards each of which comprises a plurality of pieces of hardware. The configuration information storing unit includes system board information in which hardware configuring the plurality of system boards is registered as a board element for each of the plurality of system boards, and a system board list in which one or more system boards configuring the plurality of domains are registered as a domain element for each of the plurality of domains.

The computer system of an embodiment of the present invention has the system board information in which a status for expressing an incorporation status and an operation status for each of the plurality of system boards is registered.

The computer system of an embodiment of the present invention has the system board list in which the system boards are reserved as the domain elements by registering one or more system boards which are not configure the plurality of the domains and can configure each of a plurality of the domains.

The computer system of an embodiment of the present invention has the first domain communicating unit and the second domain communicating unit which are connected by the maintenance bus comprising a physical bus. And, a communication between the first domain communicating unit and the second domain communicating unit is executed according to a predetermined protocol.

In a method for configuring a computer system of an embodiment of the present invention, a plurality of domains is prepared each of which includes a plurality of hardware resources, and in each of which one OS operates and the OS and the plurality of hardware resources can be combined and separated. A service processor is prepared which sets and changes a configuration of each of the plurality of domains by setting and changing configuration information determining that the plurality of hardware resources are combined and separated. The service processor inputs the configuration information indicating the configuration of the domain through an interface which enables the configuration information to be inputted. The service processor registers the inputted configuration information. The service processor transmits the configuration information to the domain. The plurality of domains receive the configuration information transmitted from the service processor. The plurality of domains actually set and change the configuration of such domains based on the received configuration information.

According to the computer system and the computer system configuring method of an embodiment of the present invention, the service processor registers the inputted configuration information and transmits the inputted configuration information to the domain, and the domain actually sets and changes a configuration of the domain based on the received configuration information. Thereby, the service processor can instruct that the configuration of the domain is initially set before the domain operates, and even while the domain is operating, the service processor can also instruct that the configuration of the domain is changed. As a result, the service processor can always initially set and change the configuration of the domain. That is, the service processor can change the configuration of the domain only with a single path and a single process. Thereby, such a troublesome operation can be eliminated that operation target (or input terminal) is changed when the configuration of the domain is initially set or changed, so that the convenience can be improved for the user. The service processor understands the whole configuration of the computer system to be able to change the configuration of the domain, so that mistakes of the operation can be reduced when the configuration is changed.

According to the computer system of an embodiment of the present invention, the service processor includes the interface for enabling the configuration information to be inputted from the input unit. Thereby, the user can directly access the service processor to instruct the configuration of the domain to be changed. As a result, it can become unnecessary that the user purchases the external apparatus for initially setting the configuration of the domain.

According to the computer system of an embodiment of the present invention, the configuration information storing unit registers the hardware configuring the system board, and registers the system board configuring the domain. Thereby, the configuration information can be registered for each domain and each system board. As a result, the destination to which the hardware resource is incorporated can be set or changed for each domain, and the configuration of the domain can be dynamically changed while the domain is operating.

According to the computer system of an embodiment of the present invention, an incorporation status and an operation status for each of the plurality of system boards is registered. Thereby, it can be known whether the system board is incorporated in the actually-operating domain. As a result, when the configuration of the domain is dynamically changed, the configuration of the domain is correctly changed in consideration of the operating condition of the domain and the configurability of the domain (reservation of the domain element).

According to the computer system of an embodiment of the present invention, the system board, which is not configure and can configure the domain, is reserved as the domain element. Thereby, by predetermining the available configuration of the domain, the domain, in which the hardware resource can be combined or can be moved, can be reserved. That is, the configuration of the domain is caused to be flexible, and can be dynamically changed. As a result, the computer system can be securely designed.

According to the computer system of an embodiment of the present invention, the first and the second domain communicating units are connected by the maintenance bus, and communicate according to the predetermined protocol. Thereby, the service processor can instruct the configuration changing engine operating on the OS to change the configuration of the domain. As a result, the service processor can change the configuration of the domain which has been changed on the OS, and the service processor can always initially set and change the configuration of the domain.

### BRIEF DESCRIPTION OF THE DRAWINGS

FIG. 1 is a diagram illustrating an example of a configuration of a computer system of the present invention.
FIG. 2 is a diagram illustrating an example of a configuration of a domain of the present invention.
FIG. 3 is a diagram illustrating an example of a configuration of an interface of the present invention.
FIGS. 4A and 4B are a diagram illustrating an example of a configuration of a configuration information storing unit of the present invention.
FIGS. 5A and 5B are a diagram describing an example of a configuration of a configuration information storing unit of the present invention.
FIG. 6 is a diagram describing an example of a configuration of a domain communicating unit of the present invention.
FIG. 7 is a diagram describing an example of a configuration of a configuration changing engine of the present invention.
FIG. 8 is a process flow of an example for initially setting the domain of the present invention.
FIG. 9 is a diagram describing an example when configuration information is set and changed according to the present invention.
FIG. 10 is a process flow of an example for changing the configuration of the domain of the present invention.
FIG. 11 is a diagram illustrating the computer system which is a background of the present invention.

### DETAILED DESCRIPTION OF THE PREFERRED EMBODIMENTS

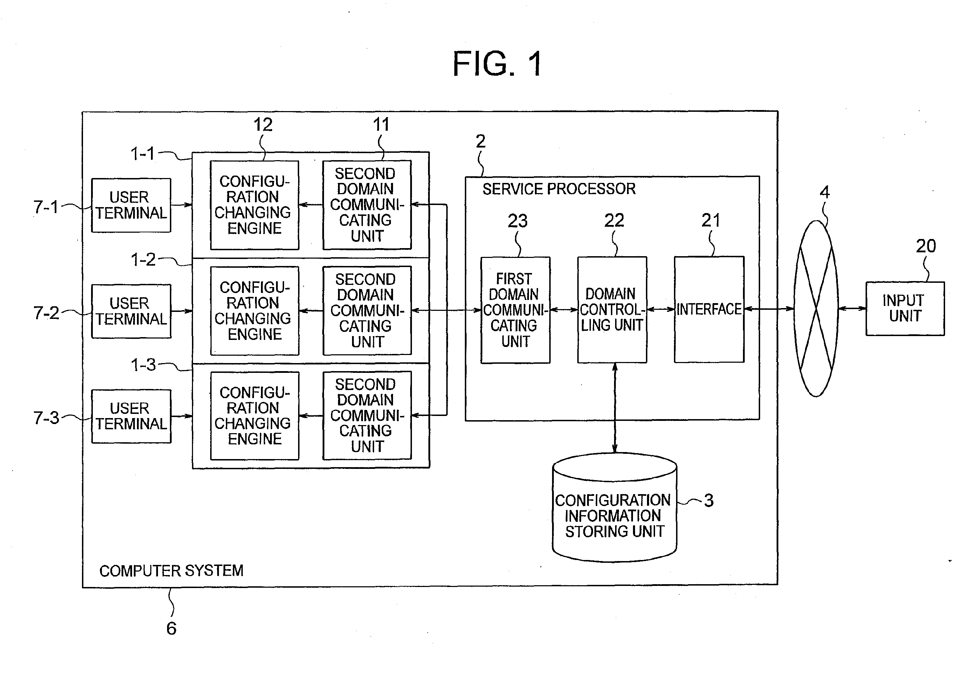

FIG. 1 is a computer system configuration diagram, and illustrates an example of a configuration of the computer system of an embodiment of the present invention.

A computer system 6 includes a plurality of domains 1 and a service processor 2. The plurality of domains 1 corresponds to main box of the computer system 6. The service processor 2 is a computer used by a system administration person to manage the plurality of domains 1.

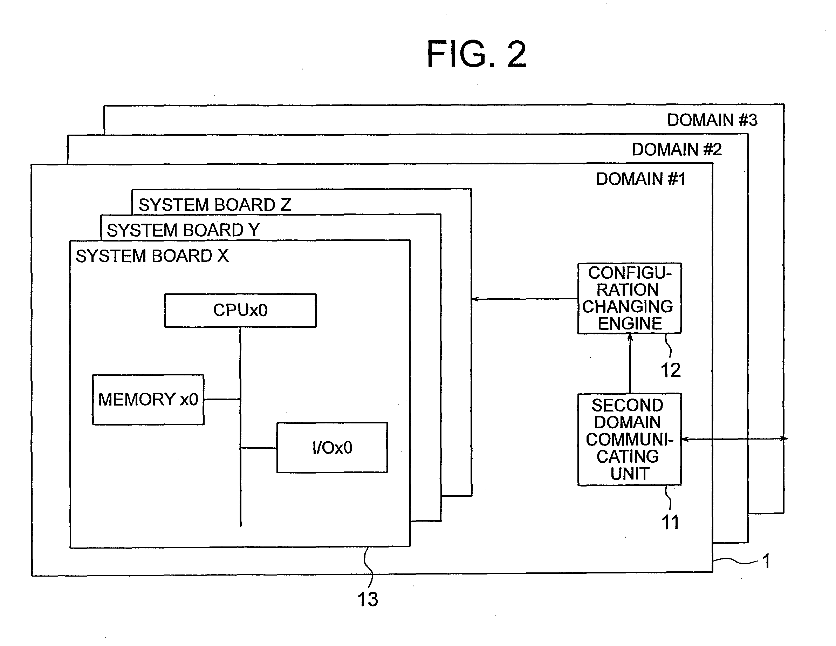

As shown in FIG. 2, one domain 1 includes a plurality of hardware resources. The plurality of hardware resources includes a plurality of system boards 13. The system board 13 is an element of the domain. Each of the plurality of system boards 13 includes a plurality of pieces of hardware (or a set of the hardware resources). The hardware is an element of the board (the system board 13). For example, the board element includes the hardware resources such as a CPU, a memory, and an I/O (input/output) apparatus. The system board 13 certainly includes one CPU as the board element thereof.

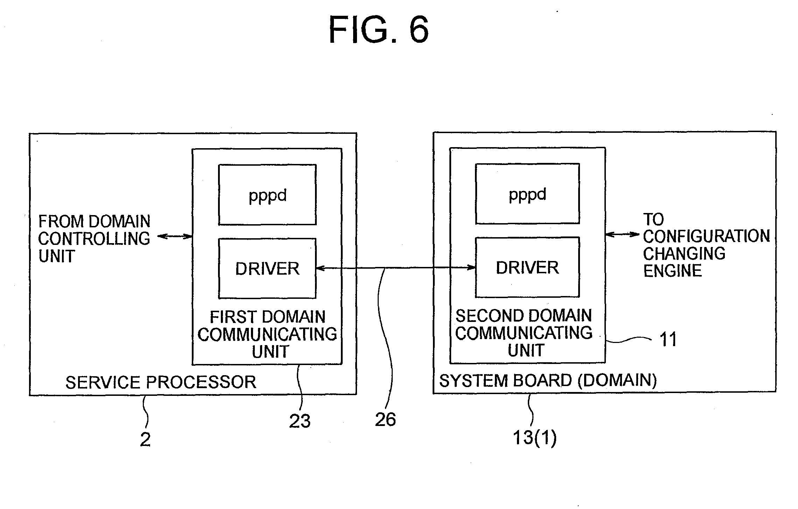

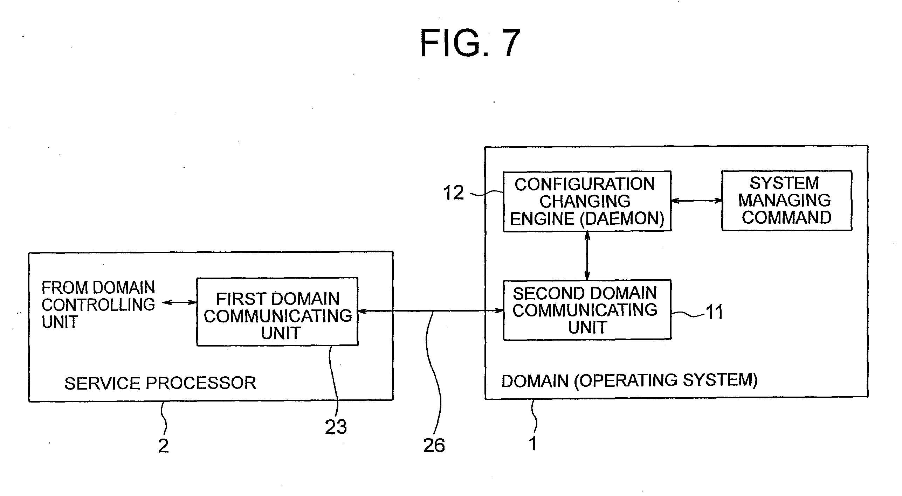

As shown in FIG. 1 and FIG. 2, each of the domains 1 includes a second domain communicating unit 11 and a configuration changing engine 12 in addition to the plurality of system boards 13. The second domain communicating unit 11 receives the configuration information transmitted from the service processor 2 (refer to FIG. 6). The configuration changing engine 12 operates on an OS of the domain 1 (Operating System, not illustrated), and actually sets and changes the configuration of the domain 1 based on the configuration information received by the second domain communicating unit 11 (refer to FIG. 7). That is, the configuration changing engine 12 initially sets, adds, and deletes the hardware resource for the OS of the domain 1 thereof. That is, the configuration changing engine 12 sets and changes the configuration of the domain 1.

One OS operates in one domain 1. The domain 1 is a unit in which the OS operates, and is defined by this OS. In one domain 1, the OS thereof and the plurality of hardware resources can be combined and can be separated. Thus, the computer system 6 is a large-size system in which a plurality of the OSs operates, and is a flexible system in which the configuration of the domain 1 can be changed.

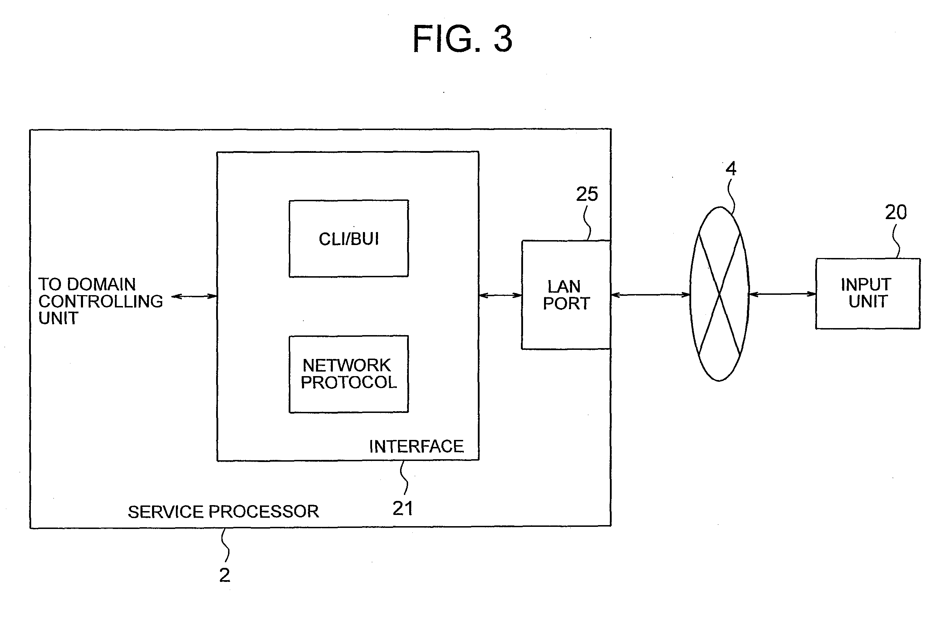

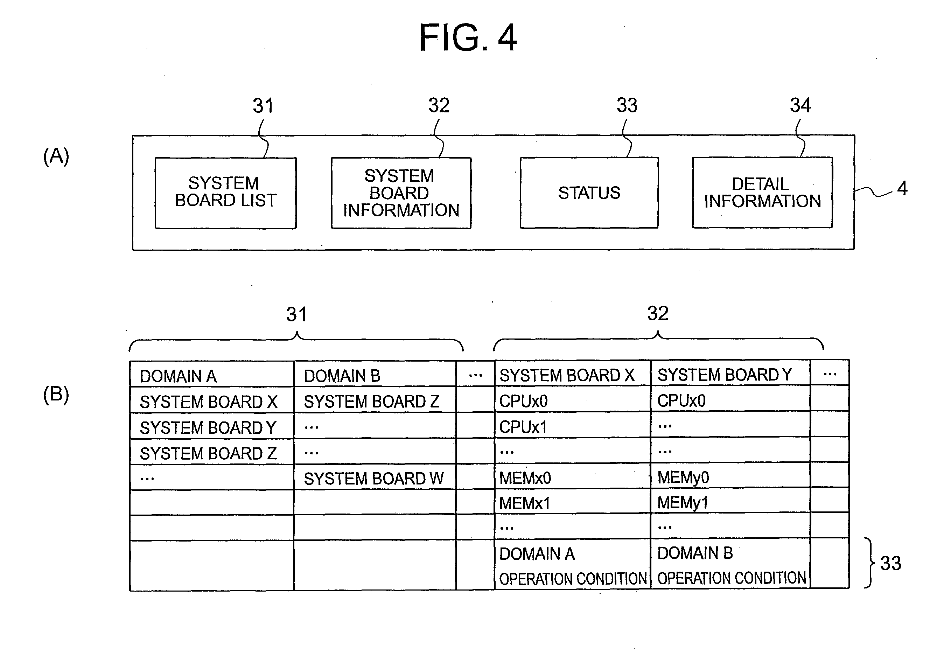

As shown in FIG. 1, the service processor 2 includes an input unit 20, an interface 21, a configuration information storing unit 3, a first domain communicating unit 23, and a domain controlling unit 22. The input unit 20 is a terminal of the service processor 2, and inputs the configuration information indicating the configuration of the domain 1. The interface 21 enables the configuration information to be inputted from the input unit 20 (refer to FIG. 3). The domain controlling unit 22 manages the configuration information storing unit 3, and communicates with the domain 1 (or the OS thereof), and controls the configuration of the domain 1. For example, the domain controlling unit 22 registers the configuration information inputted from the input unit 20 through the interface 21 in the configuration information storing unit 3, and transfers the configuration information to the first domain communicating unit 23. The configuration information storing unit 3 is, for example, a database (DB), registers the configuration information of the domain 1 (refer to FIG. 4A to FIG. 5B). The first domain communicating unit 23 communicates with the domain 1. For example, the first domain communicating unit 23 transmits the configuration information to the domain 1 (refer to FIG. 6).

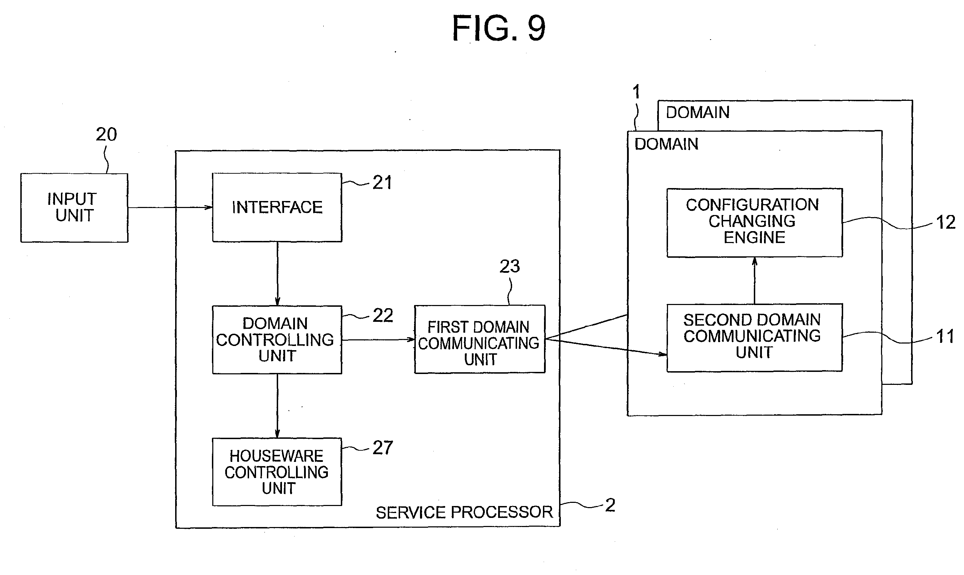

The service processor 2 turns on the power supply, initially sets, and turns off the power supply for the hardware (for example, the system board 13) configuring the domain 1. To execute such processings, a houseware controlling unit 27 is provided which is omitted in FIG. 1, but is illustrated in FIG. 9 (this will be described later). The service processor 2 sets and changes the configuration of each of the plurality of domains 1 by setting and changing the configuration information. The configuration information defines combination and separation of a plurality of hardware resources.

FIG. 3 is a diagram illustrating an example of a configuration of the interface 21 of the present invention. In FIG. 3, it will be omitted to illustrate a part other than a part for describing the interface 21.

The input unit 20 of the service processor 2 is remotely provided from the service processor 2 and the domain 1(or the computer system 6). The input unit 20 and the interface 21 are connected through a network 4. The network 4 comprises the Internet, for example. The service processor 2 includes a port to which the network 4 can be connected, for example, a LAN port 25.

A network protocol such as the TELNET, the SSH, and the HTTP (hereinafter, referred to as the TELNET, and the like.) is installed in the interface 21. Thus, the input unit 20 can access the service processor 2 with the TELNET, and the like, through the network 4, the LAN port 25, and the interface 21, so that the input unit 20 can connect to the service processor 2.

In addition, a GUI, such as the CLI (Command Line Interface) based on a command and the BUI (Browser User Interface) based on a browser, are installed in the service processor 2. Thereby, the input unit 20 can initially set, change, and refer to the configuration information in the configuration information storing unit 3 by accessing with the TELNET, and the like to executing the CLI or the BUI.

FIG. 4A is a diagram illustrating an example of the whole configuration of the configuration information storing unit 3 of the present invention.

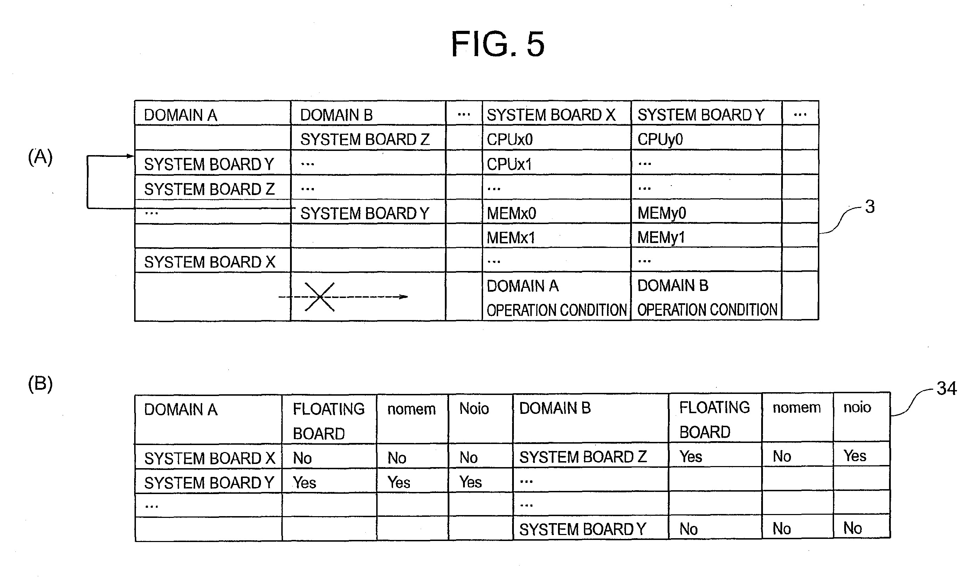

In this example, the configuration information storing unit 3 includes a system board list 31, system board information 32, a status 33, and detail information 34. For each of the plurality of domains 1, one or more system boards 13 configuring the domain 1 are registered in the system board list 31 as the domain element (refer to FIG. 4B). For each of the plurality of system boards 13, the hardware configuring the system board 13 is registered in the system board information 32 as the board element (refer to FIG. 4B). The status 33 expresses the incorporation status and the operation status for each of the plurality of system boards 13 (refer to FIG. 4B). A detailed condition for incorporating each of the plurality of system boards 13 is registered in the detail information 34 (refer to FIG. 5B).

FIG. 4B is a diagram illustrating an example of a configuration of the configuration information storing unit 3 of the present invention.

One or more system boards 13, which can configure the plurality of domains 1 (or each domain 1), are registered as the domain element for each of the plurality of domains 1 in the system board list 31. Thus, the system board 13 is a unit for initially setting and changing the configuration of the domain 1. The unit may be not only the system board 13 but also a predetermined set of the hardware resources. The system board 13 is registered with a system board number, which is unique to the system board 13, for example, "system board X".

One or more hardware resources (or hardware) configuring the plurality of system boards 13 (or each system board 13) is registered in the system board information 32 as the board (the system board 13) element for each of the plurality of system boards 13. The hardware resource is registered with a hardware number, which is unique to the hardware resource, for example, "CPUx0".

The status 33 indicates the incorporation status to the OS and an operation status for each of the plurality of system boards 13 (or each system board 13). The status 33 includes a domain number which is unique to the domain 1 and status information (operation status or non-operation status). As shown in FIG. 4B, for example, the system board X is incorporated in the domain 1 whose domain number is "domain A", and it is indicated that the domain A is "operating". The user can quickly know what status the computer system 6 is in by referring to the status 33 through the service processor 2 before the configuration of the domain 1 is changed, for example.

The same system board 13 can be registered as the domain element of each of any two or more domains 1 in the system board list 31. As shown in FIG. 4B, for example, "system board Y" is registered as the domain element of the domains A and B.

As described above, when the same system board 13 is registered as the domain element of each of the two or more domains 1, the system board 13 is connected only to the OS of any one of the domains 1, and operates. As shown in FIG. 4B, for example, the "system board Y" is combined only to the OS of the domain B, and operates as the hardware resource of the domain B.

In this case, the system board Y viewed from the domain A is the system board 13 which is not configure (not combined) the domain A, but can configure the domain A. That is, the system board 13, which is not configure the domain 1 and can configure the domain 1, can be registered in the system board list 31. In other words, the system board 13 can be reserved as the domain element of the domain 1. In this case, the domain element is configuration reservation information of the domain 1.

The domain controlling unit 22 reserves the system board 13 as the domain element by registering the system board 13 which is not configure the domain 1 and can configure the domain 1 in the system board list 31, according to the configuration information. Thus, it is possible to register in the system board list 31 not only information (configuration information) on the system board 13 which is currently incorporated in the domain 1, but also information (configuration reservation information) on the system board 13 which will be incorporated in the domain 1 in the future. Thereby, it is possible to predetermine the destination to which the system board 13 is incorporated, and to prevent the system board 13 from being wrongly assigned to the domain 1 or to prevent the domain 1 whose configuration is wrong from being started up, due to an operation mistake in changing of the configuration.

FIG. 5A is a diagram describing an example of a configuration of the configuration information storing unit 3 of the present invention, and illustrates an example for changing the configuration of the domain 1 when the configuration information in the configuration information storing unit 3 is changed.

As shown in FIG. 5A, for example, the same system board Y is registered in both of the plurality of domains A and B. Currently, the system board Y is actually operating in the domain B. Thus, the system board Y does not influence the domain A at all. Since the system board Y is also registered in the domain A, the system board Y can be moved from the domain B to the domain A. That is, the configurations of both of the domains A and B can be changed.

In this state, it is assumed that it is instructed according to the configuration information inputted from the input unit 20 that the system board Y is moved from the domain B to the domain A. In this case, the domain controlling unit 22 refers to the configuration information storing unit 3 regarding the system board Y, and moves the system board Y from the domain B to the domain A based on the configuration information in the configuration information storing unit 3. That is, the system board Y is incorporated (or combined) in the OS of the domain A.

As described above, the domain controlling unit 22 refers to the incorporation status and the operation status of the status 33, and combines the designated system board 13 to another OS (or the domain 1) according to the configuration information for the designated system board 13 combined to the operating OS (or the domain 1). As described later, in this time, the configuration changing engine 12 actually changes the configuration of the domains B and A based on this changed configuration information.

By contraries, in FIG. 5A, the system board X is registered in the domain A, and is not registered in the domain B. Currently, the system board X is actually operating in the domain A. Since the system board X is not registered in the domain B, the system board X cannot be moved (or is prohibited) from the domain A to the domain B.

In this condition, it is assumed that it is instructed to move the system board X from the domain A to the domain B according to the configuration information inputted from the input unit 20. In this case, the domain controlling unit 22 refers to the configuration information storing unit 3 regarding the system board X, and prohibits the system board X to be moved from the domain A to the domain B based on the configuration information in the configuration information storing unit 3. Thus, the system board X is not incorporated (or is not combined to) in the OS of the domain B.

As described above, the domain controlling unit 22 prohibits the unregistered system board 13 to be combined to the OS when the system board 13, which is not registered in the system board list 31, is instructed to be combined to the OS according to the configuration information, and regardless of the instruction. Thereby, when the system board 13 is not registered in the configuration information storing unit 3, the system board 13 is not incorporated in the OS. Then, it is possible to prevent the system board 13 from being wrongly incorporated due to the input mistake in the changing of the configuration information. As a result, the security of the computer system 6 can be improved.

As described above, when the currently-unregistered hardware resource is combined to the OS, the service processor 2 (or the domain controlling unit 22) temporarily additionally registers the hardware resource in the configuration information storing unit 3. Then, the service processor 2 combines the currently-unregistered hardware resource to the OS. That is, the service processor 2 additionally registers the system board 13, which is the hardware resource, as the domain element which can configure the domain 1 corresponding to the OS, according to the instruction from the input unit 20. Next, the domain 1 combines the additionally-registered system board 13 to the OS of the domain 1 based on the configuration information received from the service processor 2.

For example, in the example of FIG. 5A, the system board X is additionally registered to the domain B in the configuration information storing unit 3. Next, when it is instructed to move the system board X from the domain A to the domain B, the domain controlling unit 22 moves the system board X from the domain A to the domain B based on the configuration information storing unit 3.

FIG. 5B is a diagram describing an example of a configuration of the configuration information storing unit 3 of the present invention, and particularly illustrates the configuration of the detail information 34.

When the system board 13 is combined to the domain 1, the OS of the domain 1 determines an ID and an address to be acknowledged by the OS according to the order that the plurality of system boards 13 are described in the corresponding system board list 31. On the other hand, the order of the system boards 13 in the domain 1 can be freely set in the system board list 31. Thus, the order of the description in the system board list 31 influences the ID (or process ID) and the address (or memory address), both of which are to be acknowledged by the OS.

Concretely, the kernel area and the system area are stored in the upper address of the memory address. Thus, when the hardware resource is disconnected from the OS by changing the configuration, the lower address part can be more easily disconnected. The system boards 13, in which the configuration is easily changed (or the memory address is assigned to the lower address) is referred to as a floating board. The floating board can be designated in the description order in the system board list 31.

On the other hand, the detail information 34 is information for controlling the ID and the address of the system boards 13 independently of the description order in the system board list 31. That is, the detail information 34 directly designates the floating board. In other words, when the system boards 13 includes at least a memory, information whether or not each of the plurality of system boards 13 registered as the domain element is the floating board is registered in the detail information 34. As shown in FIG. 5B, for example, when the item "floating board" is "Yes" for the system board Y of the domain A, it is indicated that the system board Y is the floating board. That is, it is indicated that the lower address in the OS is assigned as a memory address.

As in the above, information for indicating that the OS does not use the memory of the system board 13, and information for indicating that the OS does not use the I/O apparatus of the system board 13 can be also registered in the detail information 34. That is, when the system board 13 includes the memory or the I/O apparatus, information whether or not the system board 13 including the memory or the I/O apparatus uses the memory or I/O apparatus is registered in the detail information 34. As shown in FIG. 5B, for example, when the item "nomem" is "Yes" for the system board Y of the domain A, it is indicated that the OS does not use the memory of the system board Y. Further, when the item "noio" is "Yes" for the system board Y of the domain A, it is indicated that the OS does not use the I/O apparatus of the system board Y.

The detail information 34 can be registered for each domain 1. Thus, the different instruction can be set for the different domain 1 even when the system board is the same. As shown in FIG. 5B, for example, in connection with the system board Y, all the items "floating board", "nomem", and "noio" are "Yes" for the domain A, on the other hand, all the items are "No" for the domain B. Thus, the configuration of the domain 1 can be caused to be more flexible.

FIG. 6 is a diagram describing an example of a configuration of the first and second domain communicating units 23 and 11 of the present invention. In FIG. 6, it will be omitted to illustrate a part other than a part for describing the first and second domain communicating units 23 and 11.

The first domain communicating unit 23 and the second domain communicating unit 11 are connected by a maintenance bus 26 which is a physical bus (communication path). Thereby, each of the plurality of system boards 13 configures the domain 1 and the service processor 2 are connected.

A communication (data communication) between the first domain communicating unit 23 and the second domain communicating unit 11 is executed according to a predetermined protocol. This communication is controlled by a driver provided in each of the first and second domain communicating units 23 and 11. That is, the pppd (Point-to-Point protocol daemon) is installed in (the upper side of) each driver, for example. Thus, a communication can be executed by the PPP (Point-to-Point protocol) between the service processor 2 and the domain 1. Thereby, the service processor 2 can instruct the domain 1 (the configuration changing engine 12 of the domain 1) to change the configuration. That is, the configuration of the domain 1 can be also changed in addition to the initial setting for the configuration of the domain 1. The service processor 2 can obtain the configuration information owned by the domain 1.

FIG. 7 is a diagram describing en example of a configuration of the configuration changing engine 12 of the present invention. In FIG. 7, it will be omitted to illustrate a part other than a part for describing the configuration changing engine 12.

The configuration changing engine 12 includes, for example, the daemon (a program being permanently stored on the OS) operating on the OS in the domain 1. The daemon 12 combines and separates the OS and the plurality of hardware resources by executing a system managing command installed by the OS based on such configuration information according to the instruction for changing the configuration. The daemon 12 assigns and releases a job for the hardware resources (the CPU, the memory, the I/O apparatus, and the like).

When receiving a request (or notice) for changing the configuration from the service processor 2, the configuration changing engine 12 executes the system managing command which is installed on the OS. Thereby, the OS adds and deletes the hardware resource and reads the configuration information, and returns the configuration information as a response to the service processor 2 through the maintenance bus 26. As described above, due to providing the configuration changing engine 12 on the domain 1, it is possible to receive the instruction for changing the configuration from the service processor 2, and to change the configuration on the OS.

Meanwhile, the configuration information registered in the configuration information storing unit 3 is shared by the plurality of domains 1 and the service processor 2. That is, before the domain 1 starts operating, the configuration information can be initially set (only) from the service processor 2 to the configuration information storing unit 3. In other words, the configuration information is initially set by a terminal (or the input unit 20) of the service processor 2. On the other hand, after the domain 1 has started operating, the setting of the configuration information can be changed from both of the service processor 2 and the domain 1. That is, the setting is changed by the terminal (or the input unit 20) of the service processor 2 and a terminals 7 (7-1 to 7-3) of the domain 1. Thereby, the system administration person can execute the initial setting and the setting change for the configuration information from the service processor 2. Meanwhile, the domain 1 and the terminal 7 are actually connected by a network, for example, the Internet.

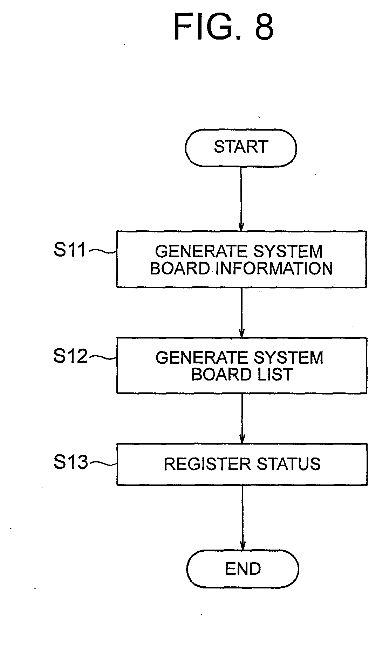

FIG. 8 is a process flow of an example for initially setting the domain of the present invention, and illustrates a process before the domain 1 starts operating (or before the power supply is turned on).

First, the service processor 2 generates the system board information 32 for each system board 13 according to the configuration information inputted from the input unit 20 by the user (step S11). That is, when the system board 13 is physically inserted to or pulled from an installation board (not illustrated), hardware resource information on the CPU, the memory, the I/O, and the like which configure the system board 13 is generated, and is registered in the configuration information storing unit 3.

Next, the service processor 2 generates the system board list 31 for each domain 1 according to the configuration information inputted from the input unit 20 by the user (step S12). That is, the system board 13 configuring (or which may configure) the domain 1 is registered in the configuration information storing unit 3. At this time, the detail information 34 is also likely generated.

Next, the status 33 of the system board 13 is registered for each system board 13 (step S13). That is, the status 33 such as the incorporation status to the domain 1 and the operation status is registered in the configuration information storing unit 3 for each system board 13.

FIG. 9 is a diagram describing an example for changing the configuration of the domain 1 of the present invention, and illustrates that the configuration of the domain 1 is changed while the domain 1 is operating. In FIG. 9, it will be omitted to illustrate a part other than a part related to the description for changing the configuration of the domain 1.

When it becomes necessary to change the configuration of the domain 1 while the domain 1 is operating, for example, the system administration person requests the domain controlling unit 22 to change the configuration of the domain 1 from the terminal (or the input unit 20) of the service processor 2 through the interface 21.

When the configuration changing is to add the hardware resource (or the system board 13), the domain controlling unit 22 registers the configuration information in the configuration information storing unit 3, and requests the houseware controlling unit 27 to initialize the hardware resource. Then the houseware controlling unit 27 initializes the hardware resource, and notifies the domain controlling unit 22 of a result of the initialization. After the initialization is completed, the domain controlling unit 22 receiving this notice communicates with the domain 1 with the PPP. Thereby, the domain controlling unit 22 requests the configuration changing engine 12 of the OS of the domain 1 to add the hardware resource according to the instruction for changing the configuration, which is inputted from the user. Then, the configuration changing engine 12 adds the hardware resource. After then adding process is completed, the configuration changing engine 12 notifies the service processor 2 of a result of the adding process. Thereby, the domain controlling unit 22 terminates the process (or adding process) for changing the configuration.

When the configuration changing is to delete the hardware resource, the domain controlling unit 22 registers the configuration information in the configuration information storing unit 3, and communicates with the domain 1 with the PPP. Thereby, the domain controlling unit 22 requests the configuration changing engine 12 of the OS of the domain 1 to delete the hardware resource according to the instruction for changing the configuration, which is inputted from the user. Then, the configuration changing engine 12 deletes the hardware resource. After the deleting process is completed, the configuration changing engine 12 notifies the service processor 2 of a result of the deleting process. After receiving this notice, the domain controlling unit 22 requests the houseware controlling unit 27 to stop the hardware resource. Then, the houseware controlling unit 27 causes the hardware resource to stop (for example, to turn off the power supply), and notifies the domain controlling unit 22 of a result of the request. Thereby, the domain controlling unit 22 terminates the process (or deleting process) for changing the configuration.

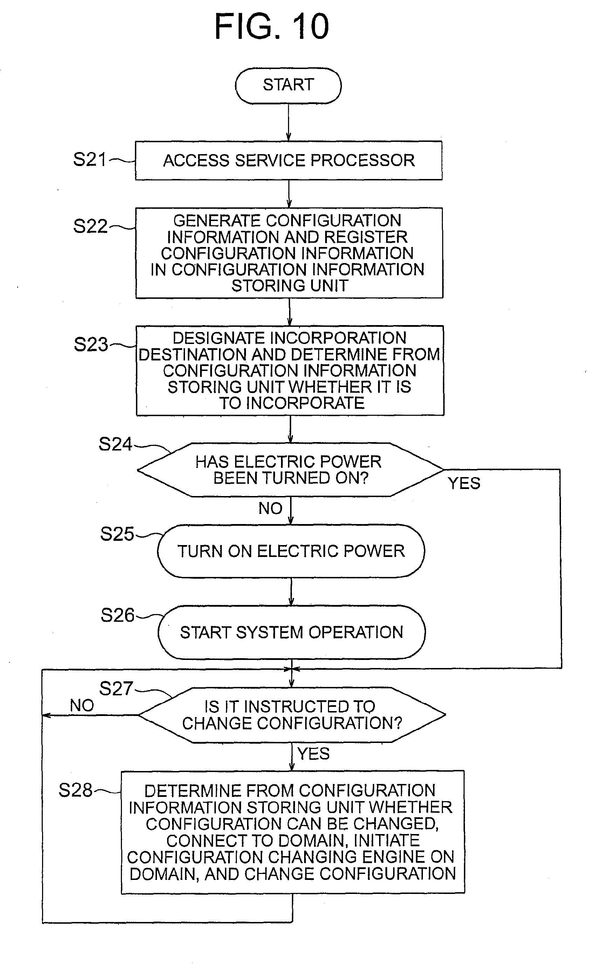

FIG. 10 is a process flow of an example of the initial setting and the setting change for the domain 1 of the present invention, and illustrates the initial setting and the configuration change for the domain 1 while the domain 1 is operating.

First, the terminal (or the input unit) 20 of the service processor 2 accesses the domain controlling unit 22 of the service processor 2 with the TELNET, and the like to initially set the configuration of the domain 1 (step S21). Next, as shown in FIG. 10, the domain controlling unit 22 generates the configuration information of the domain 1 according to the input of the user, and registers the configuration information in the configuration information storing unit 3 (step S22). After this processing, as described by referring to FIG. 5A, the domain controlling unit 22 designates the domain 1 in which the system board 13 is incorporated according to the input of the user (step S23). At this time, when the domain 1 which is not registered in the configuration information storing unit 3 is designated, the domain controlling unit 22 returns an error to the input unit 20. For example, as described by referring to FIG. 5A, this is the case that the system board X is designated to be incorporated in the domain B.

Next, the domain controlling unit 22 checks whether or not the power supply is turned on in the domain 1 (or the computer system 6) (step S24), and when the power supply is not turned on, as described above, the domain controlling unit 22 requests the houseware controlling unit 27 to turn on the power supply of the domain 1 (step S25). At this time, the power supply can be also turned on at the same time in a plurality of the domains 1. When the power supply is turned on at the step S24, the following steps S25 and S26 are omitted. As described above, the user is not actually conscious of turning on the power supply of the domain 1. That is, even when the user is not conscious of initially setting the configuration information and of changing the setting of the configuration information, for example, the failure is not induced in the computer system 6 due to the wrong combination of the system board 13.

Next, the OS is started up according to the designated configuration information, and the computer system 6 starts operating to become being operating (step S26). After the power supply of the domain 1 is turned on, the domain controlling unit 22 checks whether or not the instruction for changing the configuration of the domain 1 is inputted (step S27), and, when the instruction is not inputted, such the step S27 is repeated. When the instruction is inputted, as described above, the domain controlling unit 22 changes the configuration of the domain 1 according to the input (step S28). At this time, the configuration can be also changed by any one of the input unit 20, which is the terminal of the service processor 2, or the terminal 7 of the domain 1.

As described above, according to the present embodiment, in the computer system and the computer system configuring method, before the domain operates, and while the domain is operating, all the configuration of the domain can be initially set and can be changed by the service processor. Thereby, the configuration of the domain can be reserved, and while the domain is operating, the configuration of the domain can be dynamically and correctly changed, and as a result, the computer system can be securely designed. In addition, the external apparatus can be caused to be unnecessary, and the convenience for the user can be improved.

## Claims

1. A computer system, comprising:
a plurality of domains each of which comprises a plurality of hardware resources, and in each of which one OS operates and the OS and the plurality of hardware resources can be combined and be separated; and
a service processor setting and changing a configuration of each of the plurality of domains by setting and changing configuration information determining to combine and separate the plurality of hardware resources,
wherein the service processor comprises:
an input unit inputting the configuration information indicating the configuration of the domain;
a configuration information storing unit registering the configuration information;
a first domain communicating unit transmitting the configuration information to the domain; and
a domain controlling unit registering the configuration information inputted from the input unit in the configuration information storing unit, and transferring the configuration information to the first domain communicating unit, and
wherein each of the plurality of domains comprises:
a second domain communicating unit receiving the configuration information transmitted from the service processor; and
a configuration changing engine actually setting and changing the configuration of the domain based on the configuration information received by the second domain communicating unit.

2. The computer system according to claim 1,
wherein the service processor further comprises an interface to which the configuration information can be inputted from the input unit, and
wherein the domain controlling unit registers the configuration information inputted from the input unit through the interface in the configuration information storing unit, and transmits the configuration information to the first domain communicating unit.

3. The computer system according to claim 2, wherein the input unit is remotely provided from the service processor and the domain, and the input unit and the interface are connected through a network.

4. The computer system according to claim 1, wherein the configuration information storing unit is shared by the plurality of domains and the service processor.

5. The computer system according to claim 1,
wherein the plurality of hardware resources comprises a plurality of system boards, and each of the plurality of system boards comprises a plurality of pieces of hardware, and
wherein the configuration information storing unit comprises system board information in which the hardware configuring the plurality of system boards is registered as a board element for each of the plurality of system boards, and a system board list in which one or more system boards configuring the plurality of domains are registered as a domain element for each of the plurality of domains.

6. The computer system according to claim 5, wherein an OS of the domain determines an ID and an address to be acknowledged by the OS according to the order that the plurality of system boards are described in the corresponding system board list.

7. The computer system according to claim 5, wherein a status is further registered in the system board information, and the status expresses an incorporation status and an operation status of each of the plurality of system boards.

8. The computer system according to claim 7, wherein, when the system board combined to an OS in the operation status is instructed to be combined to another OS according to the configuration information, the domain controlling unit refers to the incorporation status and the operation status of the status, and combines the instructed system board to the another OS to which the system board is instructed to be combined.

9. The computer system according to claim 7, wherein the same system board is registered as the domain element of each of any two or more domains in the system board list.

10. The computer system according to claim 9, wherein, when the same system board is registered as the domain element of each of the two or more domains, the system board is combined only to an OS of any one of the two or more domains to operate.

11. The computer system according to claim 5, wherein one or more system boards which is not configure the plurality of domains and can configure the plurality of domains are registered in the system board list as the domain element for each of the plurality of domains, so that the system boards are reserved as the domain element in the system board list.

12. The computer system according to claim 11, wherein, when the system board which is not registered as the domain element of an OS in the system board list is instructed to be combined to the OS according to the configuration information, the domain controlling unit prohibits the unregistered system board to be combined to the OS.

13. The computer system according to claim 5,
wherein each of the plurality of system boards includes at least a memory, and
wherein the configuration information storing unit registers whether or not each of the plurality of system boards registered as the domain element is a floating board indicating that the lower address in the OS of the domain is assigned to the system board as the address of the memory.

14. The computer system according to claim 5,
wherein any one of the plurality of system boards includes a memory or an I/O apparatus, and
wherein the configuration information storing unit further registers whether or not the system board including the memory or the I/O apparatus uses the memory or the I/O apparatus.

15. The computer system according to claim 1, wherein the first domain communicating unit and the second domain communicating unit are connected by a maintenance bus comprising a physical bus, and the communication between the first domain communicating unit and the second domain communicating unit is executed according to a predetermined protocol.

16. The computer system according to claim 1, wherein the configuration changing engine comprises a daemon operating on the OS of the domain.

17. The computer system according to claim 16, wherein the daemon combines and separates the OS and the plurality of hardware resources by executing a system managing command installed on the OS based on the configuration information.

18. A computer system configuring method, comprising:
preparing a plurality of domains, each of which comprises a plurality of hardware resources, in each of which one OS operates and the OS and the plurality of hardware resources can be combined and separated; and
preparing a service processor which sets and changes a configuration of each of the plurality of domains by setting and changing configuration information determining that the plurality of hardware resources are combined and separated;
inputting at the service processor the configuration information indicating the configuration of the domain through an interface which enables the configuration information to be inputted,
registering at the service processor the inputted configuration information,
transmitting the configuration information from the service processor to the domain,
receiving at the plurality of domains the configuration information transmitted from the service processor; and
setting and changing actually at the plurality of domains the configuration of the domain based on the received configuration information.

19. The computer system configuring method according to claim 18, wherein, after the power supply of the domain is turned on, the service processor transmits the configuration information to the domain.

20. The computer system configuring method according to claim 18, further comprising:
registering additionally at the service processor, when the currently-unregistered hardware resource is combined to the OS, a system board which is the hardware resource as a domain element which can configure the domain corresponding to the OS; and
combining at the domain the additionally-registered system board to the OS of the domain based on the received configuration information.
